# EUROPEAN PATENT APPLICATION

(11) **EP 4 345 973 A1**
(43) Date of publication of application: **03.04.2024**
(21) Application number: 23193121.3
(22) Date of filing: 24.08.2023
(51) Int. Cl.: H01M 10/0567, H01M 10/052, H01M 12/08, H01M 4/38, H01M 4/86, H01M 10/0568, H01M 10/0569

(54) **LITHIUM METAL BATTERY ELECTROLYTE AND LITHIUM METAL BATTERY**

(30) Priority: 30.09.2022 CN 202211207552
(71) Applicant: Jilin Dongchi New Energy Technology Co., Ltd., 130000 Changchun City Jilin (CN)
(72) Inventor: LIU, Jia, Changchun City, Jilin, 130000 (CN); XIE, Haiming, Changchun City, Jilin, 130000 (CN); CUI, Lihang, Changchun City, Jilin, 130000 (CN); CONG, Lina, Changchun City, Jilin, 130000 (CN)
(74) Representative: Croce, Valeria

(57) **Abstract**

The disclosure relates to the technical field of lithium metal batteries, and particularly relates to a lithium metal battery electrolyte and a lithium metal battery. Provided is a lithium metal battery electrolyte, including an imidazole-based poly(ionic liquid), an aprotic solvent and a lithium salt, wherein the imidazole-based poly(ionic liquid) is consisted of an imidazole-base cation and a bis((trifluoromethyl)sulfonyl)imide anion; and the imidazole-base cation has a structure shown in Formula I. The electrolyte lithium metal battery could form a stable SEI film on a surface of the lithium metal anode in situ during charge-discharge cycles of the battery. The SEI film could improve the interface stability between the lithium metal anode and the lithium metal battery electrolyte, protect the lithium metal anode and inhibit the growth of lithium dendrites, thereby improving the cycle performance and coulombic efficiency of the battery.

## Description

### TECHNICAL FIELD

The present disclosure relates to the technical field of lithium metal batteries, and particularly relates to a lithium metal battery electrolyte and a lithium metal battery.

### BACKGROUND

At present, commercial lithium-ion batteries are limited by the energy density of battery materials used therein, which have substantially reached a theoretical limit. It is urgent to develop new electrode materials to improve the energy density. Among others, lithium metal negative electrodes have a theoretical energy density of 3860 mAh/g and a low electrode potential (-3.04 V), which have attracted extensive attention of researchers and achieved a series of application results, such as lithium-sulfur batteries and lithium-air batteries.

However, lithium metal, as a negative electrode material of battery, is active in chemical properties, and easily reacts with electrolyte, oxygen and water, which results in a corrosion of surfaces of the lithium metal and a consumption of electrolytes, thereby eventually leading to a decrease of battery coulombic efficiency and cycle stability. Also, due to uneven deposition of lithium ions on surfaces of the negative electrode during battery cycles, lithium dendrites are easy to form, which may eventually pierce the separator and cause the battery to explode because of short circuit, thus posing a safety hazard.

### SUMMARY

In view of this, an object of the present disclosure is to provide a lithium metal battery electrolyte and a lithium metal battery. In the present disclosure, the lithium metal battery containing the lithium metal battery electrolyte makes it possible to inhibit the growth of lithium dendrites, and improve the cycle stability and coulombic efficiency of the lithium metal battery.

In order to achieve the above object, the present disclosure provides the following technical solutions:
Provided is a lithium metal battery electrolyte, including an imidazole-based poly(ionic liquid), an aprotic solvent and a lithium salt; wherein
the imidazole-based poly(ionic liquid) is consisted of an imidazole-base cation and a bis((trifluoromethyl)sulfonyl)imide anion; and
the imidazole-base cation has a structure shown in Formula I: 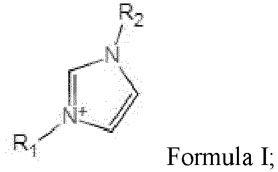
wherein in Formula I,
R₁ includes one selected from the group consisting of 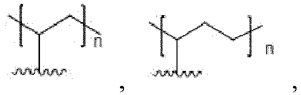 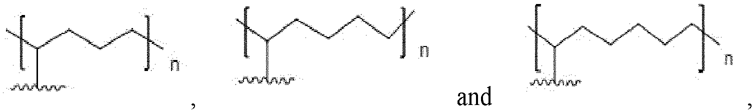 wherein n is in a range of 3-12; and R₂ includes one selected from the group consisting of 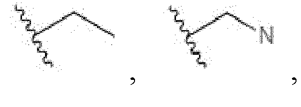 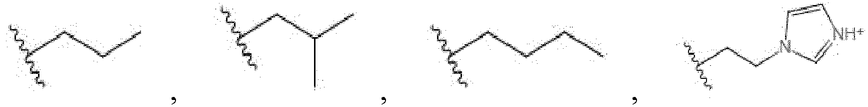 and

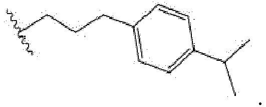

In some embodiments, the imidazole-base cation has a structure shown in any one of Formula I-1 to Formula 1-9:

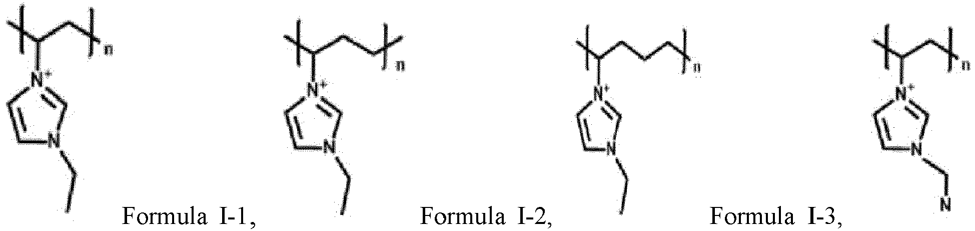

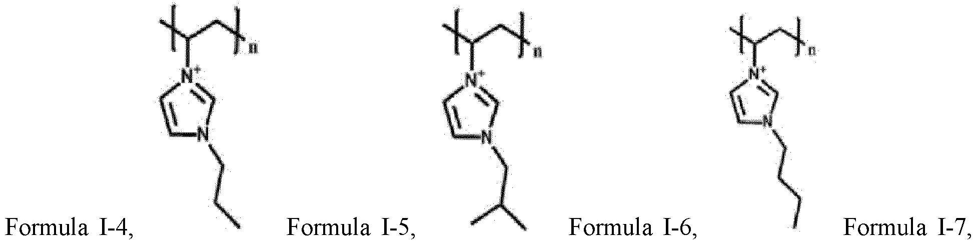

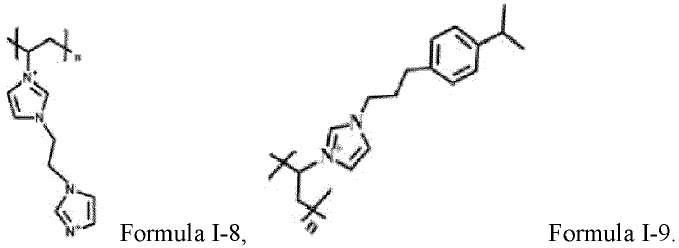

In some embodiments, the aprotic solvent includes one or more selected from the group consisting of dimethyl sulfoxide, ethylene glycol dimethyl ether, diethylene glycol dimethyl ether, tetraethylene glycol dimethyl ether, N,N-dimethylacetamide, 1,3-dioxolane, ethylene carbonate and dimethyl carbonate.

In some embodiments, the lithium salt includes one or more selected from the group consisting of lithium bis((trifluoromethyl)sulfonyl)imide, lithium hexafluorophosphate, lithium nitrate, lithium perchlorate, lithium iodide and lithium trifluoromethanesulfonate.

In some embodiments, a mass concentration of the imidazole-based poly(ionic liquid) in the lithium metal battery electrolyte is in a range of 0.398-1,452.5 g/L.

In some embodiments, a molarity of the lithium salt in the lithium metal battery electrolyte is in a range of 0.01-4.8 mol/L.

Also provided is a lithium metal battery, including a lithium metal negative electrode, a separator, an electrolyte and a positive electrode;
where the electrolyte is the lithium metal battery electrolyte described in the above technical solutions.

In some embodiments, the lithium metal battery includes a lithium-oxygen battery or a lithium-sulfur battery.

In some embodiments, under the condition that the lithium metal battery is the lithium-oxygen battery, the positive electrode is a porous oxygen positive electrode; and
under the condition that the lithium metal battery is the lithium-sulfur battery, the positive electrode is a sulfur positive electrode.

In some embodiments, the lithium metal negative electrode is made of a material including one selected from the group consisting of pure metal lithium foil, a lithium alloy, a lithium metal oxide and lithium nitride.

The present disclosure provides a lithium metal battery electrolyte, including an imidazole-based poly(ionic liquid), an aprotic solvent and a lithium salt, wherein the imidazole-based poly(ionic liquid) is consisted of an imidazole-base cation and a bis((trifluoromethyl)sulfonyl)imide anion; and the imidazole-base cation has a structure shown in Formula I. In the present disclosure, the imidazole-based poly(ionic liquid) is contained in the lithium metal battery electrolyte, wherein a polymerization of alkenyl chains and a combination of an imidazole-base cation group and bis((trifluoromethyl)sulfonyl)imide anion group make it possible to improve the reduction stability of the lithium metal battery electrolyte, thereby improving the compatibility of the lithium metal battery electrolyte with the negative electrode material. During battery cycles, a stable solid electrolyte interphase (SEI) film is formed *in situ* on surfaces of the lithium metal negative electrode, which could improve the interface stability between the lithium metal negative electrode and the lithium metal battery electrolyte, protect the lithium metal negative electrode and inhibit the growth of lithium dendrites, thus improving the cycle performance and coulombic efficiency of the battery.

### BRIEF DESCRIPTION OF THE DRAWINGS

FIG. 1 shows test results of cycle performance of the lithium-oxygen battery as prepared in Example 1.
FIG. 2 shows test results of cycle performance of the lithium-oxygen battery as prepared in Comparative Example 1.
FIG. 3 shows coulombic efficiency of the lithium-oxygen battery as prepared in Example 1.
FIG. 4 shows complete discharge tests of the lithium-oxygen batteries as prepared in Example 1 and Comparative Example 1.
FIG. 5 shows cross-sectional scanning electron microscope (SEM) images of lithium metal negative electrode of the lithium-sulfur batteries as prepared in Example 2 and Comparative Example 2 after five charge-discharge cycles, in which *a* corresponds to Example 2 and b corresponds to Comparative Example 2.

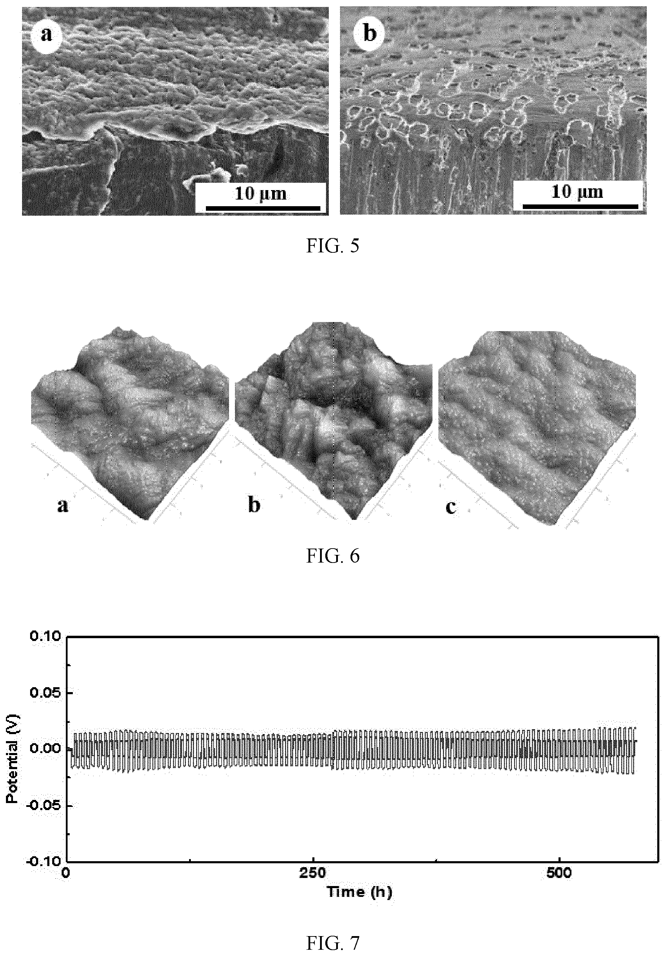

FIG. 6 shows atomic force microscope (AFM) images of the lithium metal negative electrode of the lithium-sulfur battery as prepared in Example 3 before and after 10 charge-discharge cycles and of the lithium metal anode of the lithium-sulfur battery as prepared in Comparative Example 3 after 10 charge-discharge cycles, in which *a* corresponds to the lithium metal anode of the lithium-sulfur battery as prepared in Example 3 before charge-discharge cycles, b corresponds to the lithium metal anode of the lithium-sulfur battery as prepared in Comparative Example 3 after 10 charge-discharge cycles, and c corresponds to the lithium metal anode of the lithium-sulfur battery as prepared in Example 3 after 10 charge-discharge cycles.
FIG. 7 shows test results of cycle performance of a lithium-lithium battery made from the electrolyte as prepared in Example 4.

### DETAILED DESCRIPTION OF THE EMBODIMENTS

The present disclosure provides a lithium metal battery electrolyte, including an imidazole-based poly(ionic liquid), an aprotic solvent and a lithium salt; wherein
the imidazole-based poly(ionic liquid) is consisted of an imidazole-base cation and a bis((trifluoromethyl)sulfonyl)imide anion; and
the imidazole-base cation has a structure shown in Formula I: 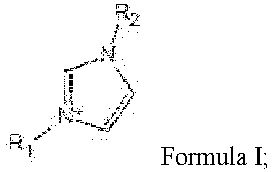
wherein in Formula I,
R₁ includes one selected from the group consisting of 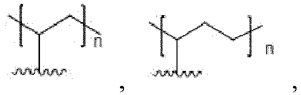 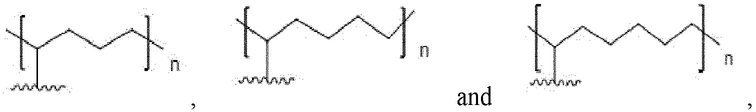 wherein n is in a range of 3-12; and
R₂ includes one selected from the group consisting of 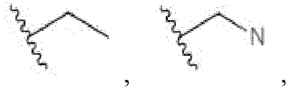 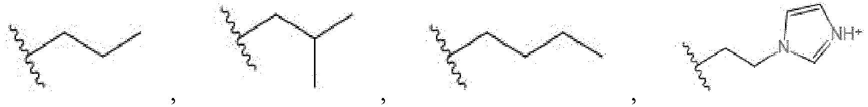 and

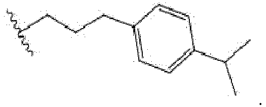

In the present disclosure, unless otherwise specified, all components are commercially available products well known to those skilled in the art.

In some embodiments, the imidazole-base cation has a structure shown in any one of Formula I-1 to Formula I-9:

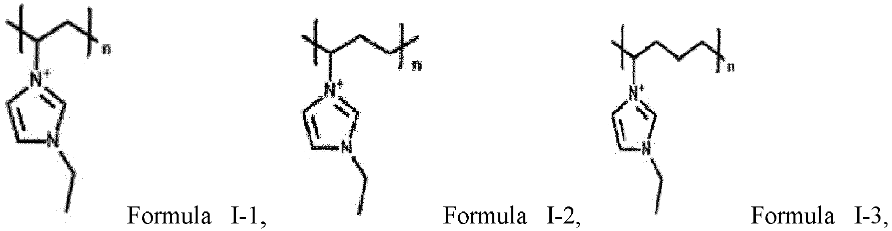

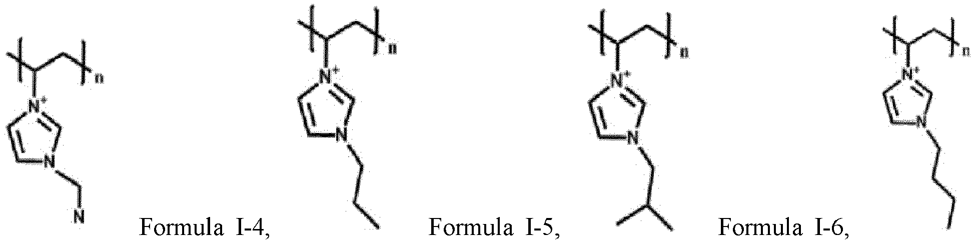

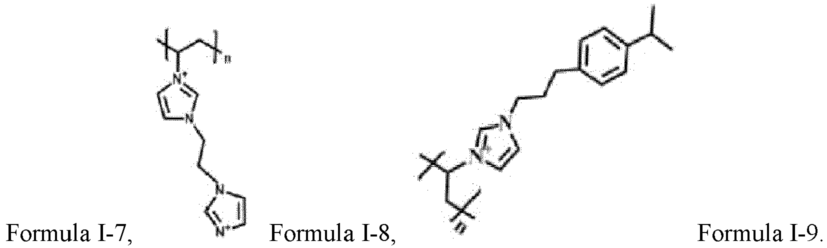

In the present disclosure, n is in a range of 3-12. In some embodiments, n is in a range of 4-11, and preferably 5-10.

In some embodiments, the aprotic solvent includes one or more selected from the group consisting of dimethyl sulfoxide, ethylene glycol dimethyl ether, diethylene glycol dimethyl ether, tetraethylene glycol dimethyl ether, N,N-dimethylacetamide, 1,3-dioxolane, ethylene carbonate and dimethyl carbonate. In some embodiments, under the condition that the aprotic solvent is any two of the above choices, a volume ratio of the any two aprotic solvents is 1: 1; and under the condition that the aprotic solvent is any three or more of the above choices, there is no special limitation on the volume ratio of the any three or more of the above choices, and any volume ratio may be used.

In some embodiments, the lithium salt includes one or more selected from the group consisting of lithium bis((trifluoromethyl)sulfonyl)imide, lithium hexafluorophosphate, lithium nitrate, lithium perchlorate, lithium iodide and lithium trifluoromethanesulfonate. In some embodiments, under the condition that the lithium salts are any two or more of the above choices, there is no special limitation on the ratio of the any two or more of the above choices, and any ratio could be used. In some embodiments, a molarity of the lithium salt in the lithium metal battery electrolyte is in a range of 0.01-4.8 mol/L, preferably 0.05-4.5 mol/L, and more preferably 0.1-4.0 mol/L.

In some embodiments, a mass concentration of the imidazole-based poly(ionic liquid) in the lithium metal battery electrolyte is in a range of 0.398-1,452.5 g/L, preferably 3.98-1,162 g/L, and more preferably 19.9-1,045.8 g/L.

In some embodiments, the lithium metal battery electrolyte is prepared by a method including the following steps:
mixing the imidazole-based poly(ionic liquid), the aprotic solvent and the lithium salt to obtain the lithium metal battery electrolyte.

In some embodiments, the mixing is carried out under stirring with a rotation speed of 200-2,000 r/min for 2-72 h.

In some embodiments of the present disclosure, the mixing is performed as follows:
subjecting the aprotic solvent and the lithium salt to first mixing to obtain a first mixed solution; and
subjecting the first mixed solution and the imidazole-based poly(ionic liquid) to second mixing.

In some embodiments, both the first mixing and the second mixing are carried out under stirring with a rotation speed the same as described above, which will not repeated herein.

The present disclosure also provides a lithium metal battery, including a lithium metal negative electrode, a separator, an electrolyte and a positive electrode;
where the electrolyte is the lithium metal battery electrolyte described in the above technical solutions.

In some embodiments, the lithium metal negative electrode is made of a material including one selected from the group consisting of pure metal lithium foil, a lithium alloy, a lithium metal oxide and lithium nitride.

In some embodiments, the lithium metal battery includes a lithium-oxygen battery or a lithium-sulfur battery. In some embodiments, the positive electrode of the lithium-oxygen battery is a porous oxygen positive electrode. In some embodiments, the positive electrode of the lithium-sulfur battery is a sulfur positive electrode.

In some embodiments, the positive electrode is obtained by preparation.

In some embodiments, the positive electrode is the porous oxygen positive electrode, which is prepared by a method including the following steps:
mixing a positive electrode material with an organic solvent to obtain a slurry, the positive electrode materials including a conductive carbon material and a binder; and
applying the slurry onto a surface of a substrate to obtain a coated substrate, and drying the coated substrate to obtain the porous oxygen positive electrode.

In some embodiments, the substrate includes a stainless steel mesh or a carbon fiber cloth.

In some embodiments, the conductive carbon material is selected from the group consisting of carbon black, porous carbon, graphene, amorphous carbon and carbon nanotubes. In some embodiments, the carbon black is selected from the group consisting of Super P, acetylene black and Ketjen Black. In some embodiments, the binder is selected from the group consisting of polyvinylidene fluoride, tetrafluoroethylene, styrene-butadiene rubber, carboxymethyl cellulose and lithium metallized nafion. In some embodiments, the organic solvent is selected from the group consisting ofN-methylpyrrolidone, acetone and ethanol.

In some embodiments, a mass ratio of the conductive carbon material to the binder is 9: 1. There is no limitation to the amount of the organic solvent, and an amount that is well known to those skilled in the art could be used. There is no limitation to the process of mixing, and a process of mixing that is well known to those skilled in the art could be used.

In the present disclosure, there is no limitation to the process of applying and the applying amount, and a means for applying and an applying amount that are well known to those skilled in the art may be used. In some embodiments, the drying is performed at a temperature of 120 °C. In some embodiments, the drying is performed for 12 h. In some embodiments, the drying is performed by vacuum drying. In some embodiments, a loading amount of the positive electrode material on the substrate is 0.5 mg/cm².

In some embodiments, the positive electrode is the sulfur positive electrode, and the sulfur positive electrode is prepared by a method including the following steps:
mixing positive electrode materials with an organic solvent to obtain a slurry, the positive electrode materials including sublimed sulfur, a conductive carbon material and a binder; and
applying the slurry onto a surface of a substrate to obtain a coated substrate, and drying the coated substrate to obtain the sulfur positive electrode.

In some embodiments, the substrate includes aluminum foil or copper foil.

In some embodiments, the conductive carbon material is selected from the group consisting of acetylene black, graphene, carbon nanotubes and porous carbon. In some embodiments, the binder is selected from the group consisting of polyvinylidene fluoride, tetrafluoroethylene, styrene-butadiene rubber and carboxymethyl cellulose. In some embodiments, the organic solvent is selected from the group consisting of N-methylpyrrolidone, acetone and ethanol.

In some embodiments, a mass ratio of the sublimed sulfur, the conductive carbon material, and the binder is 8: 1: 1. There is no limitation to the amount of the organic solvent, and an amount that is well known to those skilled in the art could be used. There is no limitation to the process of mixing, and a process of mixing that is well known to those skilled in the art could be used.

In the present disclosure, there is no limitation to the process of applying and the applying amount, and a process of applying and an applying amount that are well known to those skilled in the art may be used. In some embodiments, the drying is performed at a temperature of 60 °C. In some embodiments, the drying is performed for 12 h. In some embodiments, the drying is performed by vacuum drying. In some embodiments, a loading amount of the positive electrode material on the substrate is 1.2 mg/cm².

In some embodiments, the separator is selected from the group consisting of a glass fiber separator, a polypropylene (PP) separator and a polyethylene (PE) separator.

In some embodiments, the lithium metal battery is obtained by a method, including the following steps:
soaking the separator in the electrolyte to obtain a separator adsorbed with the electrolyte;
assembling the lithium metal negative electrode, the separator adsorbed with the electrolyte and the positive electrode in order to obtain the lithium metal battery.

In the present disclosure, there is no special limitation to the soaking, and a process of soaking that is well known to those skilled in the art could be used.

In some embodiments, the separator has a diameter of 16 mm. In some embodiments, an adsorption amount of the electrolyte on the electrolyte-adsorbed separator is in a range of 20-240 µL.

In the present disclosure, there is no special limitation to the assembling, and a process of assembling that is well known to those skilled in the art may be used. In some embodiments, the assembling is carried out in a glove box filled with argon.

In order to further illustrate the present disclosure, the lithium metal battery electrolyte and the lithium metal battery according to the present disclosure will be described in detail below in conjunction with the attached drawings and examples, which could not be understood as limiting the scope of the present disclosure.

### Example 1

In this example, the imidazole-based poly(ionic liquid) consisted of an imidazole-base cation and a bis((trifluoromethyl)sulfonyl)imide anion (TFSI-); and the imidazole-base cation had a structure shown in Formula I-7: 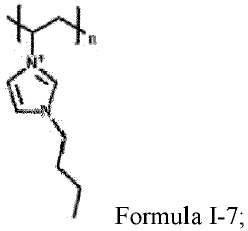 where n was 4-8.

5.46 g of lithium bis((trifluoromethyl)sulfonyl)imide and 20 mL of tetraethylene glycol dimethyl ether were mixed, and then 0.429 g of an imidazole-based poly(ionic liquid) was added thereto. The resulting mixture was stirred at a rotation speed of 350 r/min for 72 h to obtain an electrolyte (in which, a molarity of lithium bis((trifluoromethyl)sulfonyl)imide was 1 mol/L, and a mass concentration of the imidazole-based poly(ionic liquid) was 21.45 g/L).

0.9 g of Super P, 0.1 g of polyvinylidene fluoride and 2 mL ofN-methylpyrrolidone were mixed to obtain a slurry. A proper amount of the slurry was applied onto conductive carbon paper, and vacuum dried at 120 °C for 12 h to obtain a porous oxygen positive electrode (a total loading amount of Super P and polyvinylidene fluoride was 0.5 mg/cm²).

A glass fiber separator with a diameter of 16 mm was soaked in the electrolyte obtained above to obtain an electrolyte-adsorbed separator (an adsorption amount of the electrolyte is 140 µL).

A pure metal lithium foil, the electrolyte-adsorbed separator, and the porous oxygen positive electrode were assembled in order in a glove box filled with argon gas, to obtain a lithium-oxygen battery.

### Example 2

In this example, the imidazole-based poly(ionic liquid) consisted of an imidazole-base cation and a bis((trifluoromethyl)sulfonyl)imide anion (TFSI-); and the imidazole-base cation had a structure shown in Formula I-2: 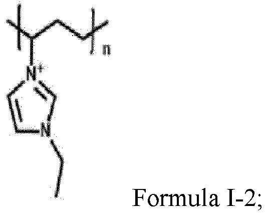 where n was 4-8.

5.46 g of lithium bis((trifluoromethyl)sulfonyl)imide, 0.138 g of lithium nitrate and 20 mL of a mixed solvent of diethylene glycol dimethyl ether and 1,3-dioxolane (in which a volume ratio of diethylene glycol dimethyl ether to 1,3-dioxolane was 1: 1) were mixed, and then 0.672 g of imidazole-based poly(ionic liquid) was added thereto. The resulting mixture was stirred at a rotation speed of 350 r/min for 72 h to obtain an electrolyte (in which, a molarity of lithium bis((trifluoromethyl)sulfonyl)imide was 1 mol/L, a molarity of lithium nitrate was 0.1 mol/L, and a mass concentration of the imidazole-based poly(ionic liquid) was 33.36 g/L).

0.8 g of sublimed sulfur, 0.1 g of acetylene black, 0.1 g of polyvinylidene fluoride and 2 mL of N-methylpyrrolidone were mixed to obtain a slurry. A proper amount of the slurry was applied onto carbon paper, and vacuum dried at 60 °C for 12 h to obtain a sulfur positive electrode (a total loading amount of sublimed sulfur, acetylene black and polyvinylidene fluoride was 1.2 mg/cm²).

A PP separator with a diameter of 16 mm was soaked in the electrolyte obtained above to obtain an electrolyte-adsorbed separator (an adsorption amount of the electrolyte was 80 µL).

A pure metal lithium foil, the electrolyte-adsorbed separator and the sulfur positive electrode were assembled in order in a glove box filled with argon gas, to obtain a lithium-sulfur battery.

### Example 3

In this example, the imidazole-based poly(ionic liquid) consisted of an imidazole-base cation and a bis((trifluoromethyl)sulfonyl)imide anion (TFSI-); and the imidazole-base cation had a structure shown in Formula I-4: 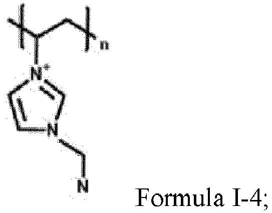 where n was 4-8.

5.46 g of lithium bis((trifluoromethyl)sulfonyl)imide, 0.138 g of lithium nitrate and 20 mL of a mixed solvent of diethylene glycol dimethyl ether and 1,3-dioxolane (in which a volume ratio of diethylene glycol dimethyl ether to 1,3-dioxolane was 1: 1) were mixed, and then 0.834 g of imidazole-based poly(ionic liquid) was added thereto. The resulting mixture was stirred at a rotation speed of 350 r/min for 72 h to obtain an electrolyte (in which, a molarity of lithium bis((trifluoromethyl)sulfonyl)imide was 1 mol/L, a molarity of lithium nitrate was 0.1 mol/L, and a mass concentration of the imidazole-based poly(ionic liquid) was 41.7 g/L).

0.8 g of sublimed sulfur, 0.1 g of acetylene black, 0.1 g of polyvinylidene fluoride and 2 mL of N-methylpyrrolidone were mixed to obtain a slurry. A proper amount of the slurry was applied onto carbon paper, and vacuum dried at 60 °C for 12 h to obtain a sulfur positive electrode (a total loading amount of sublimed sulfur, acetylene black and polyvinylidene fluoride was 1.2 mg/cm²).

A PP separator with a diameter of 16 mm was soaked in the electrolyte obtained above to obtain an electrolyte-adsorbed separator (an adsorption amount of the electrolyte was 80 µL).

A pure metal lithium foil, the electrolyte-adsorbed separator and the sulfur positive electrode were assembled in order in a glove box filled with argon gas, to obtain a lithium-sulfur battery.

### Example 4

In this example, the imidazole-based poly(ionic liquid) consisted of an imidazole-base cation and a bis((trifluoromethyl)sulfonyl)imide anion (TFSI-); and the imidazole-base cation had a structure shown in Formula I-5: 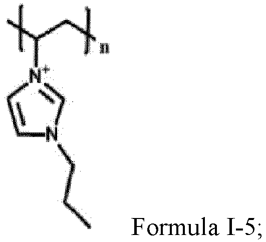 where n was 4-8.

3.04 g of lithium hexafluorophosphate and 20 mL of a mixed solvent of ethylene carbonate and dimethyl carbonate (in which a volume ratio of ethylene carbonate to dimethyl carbonate is 1: 1) were mixed, and then 0.415 g of imidazole-based poly(ionic liquid) was added thereto. The resulting mixture was stirred at a rotation speed of 350 r/min for 72 h to obtain an electrolyte (in which, a molarity of lithium hexafluorophosphate was 1 mol/L, and a mass concentration of the imidazole-based poly(ionic liquid) was 20.75 g/L).

### Comparative example 1

A lithium-oxygen battery was prepared according to the process of Example 1, except that the imidazole-based poly(ionic liquid) was not added.

### Comparative example 2

A lithium-sulfur battery was prepared according to the process of Example 2, except that the imidazole-based poly(ionic liquid) was not added.

### Comparative example 3

A lithium-sulfur battery was prepared according to the process of Example 3, except that the imidazole-based poly(ionic liquid) was not added.

### Performance Test

### Test example 1

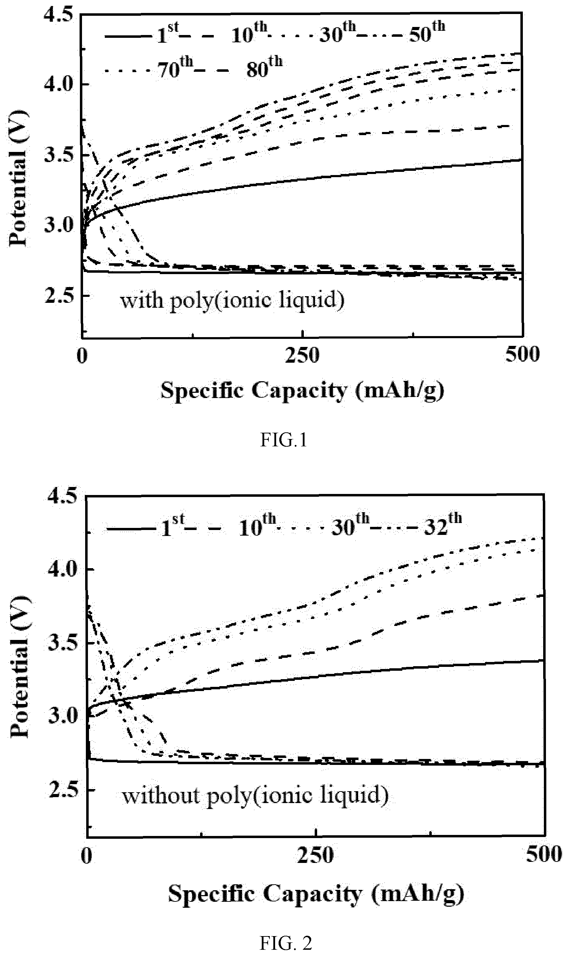

The lithium-oxygen batteries obtained in Example 1 and Comparative Example 1 were tested for constant current charge-discharge by using Land battery test system. The test was performed at a constant temperature of 25 °C, a current density of 200 mA/g, a specific capacity limit of 500 mAh/g (calculated based on the mass of conductive carbon materials in the oxygen positive electrode), and a potential of 2.3-4.2 V vs. Li/Li⁺. The test results of cycle performance are shown in FIG. 1 and FIG. 2, in which FIG. 1 shows the cycle performance of Example 1, and FIG. 2 shows the cycle performance of Comparative Example 1. As can be seen from FIG. 1 and FIG. 2, the lithium-oxygen battery according to the present disclosure has higher cycle stability.

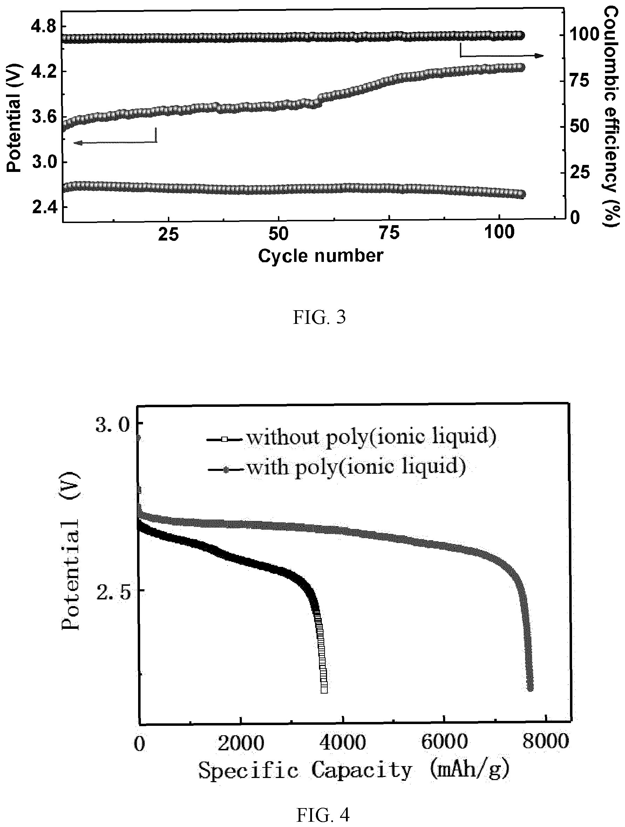

FIG. 3 shows test results of coulombic efficiency of the lithium-oxygen battery obtained in Example 1. From FIG. 3, it can be seen that the coulombic efficiency of the lithium-oxygen battery of the present disclosure is close to 100%, indicating that the capacity attenuation is small during charge-discharge process.

### Test example 2

The lithium-oxygen batteries obtained in Example 1 and Comparative Example 1 were tested for constant current full discharge. The test was performed at a constant temperature of 25 °C and a current density of 200 mA/g. The test result of a full discharge is shown in FIG. 4. From FIG. 4, it can be seen that the lithium-oxygen battery according to the present disclosure has higher discharge capacity.

### Test example 3

The lithium-sulfur batteries obtained in Example 2 and Comparative Example 2 were tested for constant current charge-discharge cycle by using Land battery test system. The tests were performed at a constant temperature of 25 °C, a current density of 0.2 C and a voltage of 1.6-2.8 V vs. Li/Li⁺. After five cycles, the lithium-sulfur batteries were disassembled, and the lithium metal negative electrodes were stripped out. Cross sections of the lithium metal negative electrodes were tested by scanning electron microscope respectively. The test results are shown in FIG. 5, in which a corresponds to Example 2, b corresponds to Comparative Example 2. From FIG. 5, it can be seen that, the surface of the lithium metal negative electrode of Example 2 is more compact and smooth with no cavities, indicating that the corrosion of electrolyte, oxygen and water on the surface of the lithium metal negative electrode can be effectively inhibited after adding imidazole-based poly(ionic liquid).

### Test example 4

The lithium metal negative electrode obtained in Example 3 was tested by atomic force microscope, and the test result of an atomic force microscope image is shown in FIG. 6a (before cycle).

The lithium-sulfur batteries obtained in Example 3 and Comparative Example 3 were tested for constant current charge-discharge cycle by using Land battery test system. The tests were performed at a constant temperature of 25 °C, a current density of 0.2 C, and a voltage of 1.6-2.8 V vs. Li/Li⁺. After 10 cycles, the lithium-sulfur batteries were disassembled, and the lithium metal negative electrodes were stripped out and tested by atomic force microscope respectively. The test results of atomic force microscope images are shown in FIG. 6, in which b corresponds to Comparative Example 3 and c corresponds to Example 3. From FIG. 6, it can be seen that compared with the atomic force microscope image before cycle, the surface of the lithium metal negative electrode without imidazole-based poly(ionic liquid) is rough and uneven after charge-discharge cycles, and corrosion occurs to a certain extent. However, the surface of the lithium metal negative electrode with imidazole-based poly(ionic liquid) is smooth and complete after charge-discharge cycles, and a SEI protective layer is generated in situ which covers the lithium metal surface compactly and evenly.

### Test example 5

A PP separator with a diameter of 16 mm was soaked in the electrolyte obtained in Example 4, to obtain an electrolyte-adsorbed separator (the adsorption amount of the electrolyte was 80 µL).

A pure metal lithium foil, the electrolyte-adsorbed separator, and a pure metal lithium foil were assembled in order in a glove box filled with argon gas, to obtain a lithium-lithium battery. The lithium-lithium battery was tested for constant current charge-discharge cycle by using Land battery test system. The test was performed at a constant temperature of 25 °C and a current density of 0.25 mA/cm² (1/1 h). The test results are shown in FIG. 7. From FIG. 7, it can be seen that the lithium-lithium battery prepared from the electrolyte of the present disclosure can stably cycle for 550 h, and the interface stability between the lithium metal surface and the electrolyte can be effectively improved by adding imidazole-based poly(ionic liquid) to the surface.

Although the above-mentioned embodiments have described the present disclosure in detail, it is only a part of the embodiments of the present disclosure, not the whole embodiments. Those skilled in the art could make other embodiments without creative labor on the basis of the above embodiments, and all these embodiments should fall within the scope of the present disclosure.

## Claims

1. A lithium metal battery electrolyte, comprising an imidazole-based poly(ionic liquid), an aprotic solvent and a lithium salt; wherein
the imidazole-based poly(ionic liquid) is consisted of an imidazole-based cation and a bis((trifluoromethyl)sulfonyl)imide anion; and
the imidazole-based cation has a structure shown in Formula I: 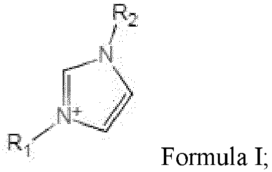
wherein in Formula I,
R₁ comprises one selected from the group consisting of 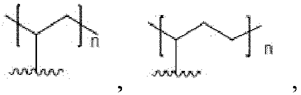 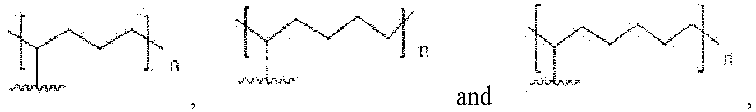 wherein n is in a range of 3-12; and
R₂ comprises one selected from the group consisting of 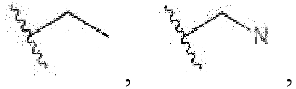 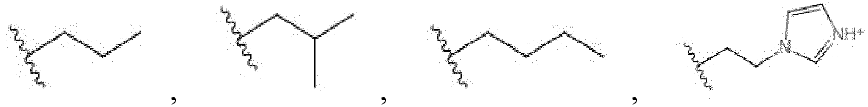 and

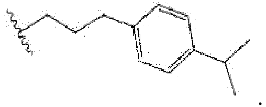

2. The lithium metal battery electrolyte of claim 1, wherein the imidazole-base cation has a structure shown in any one of Formulas I-1 to I-9:

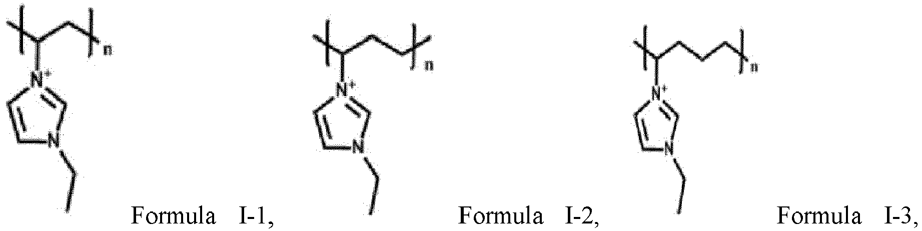

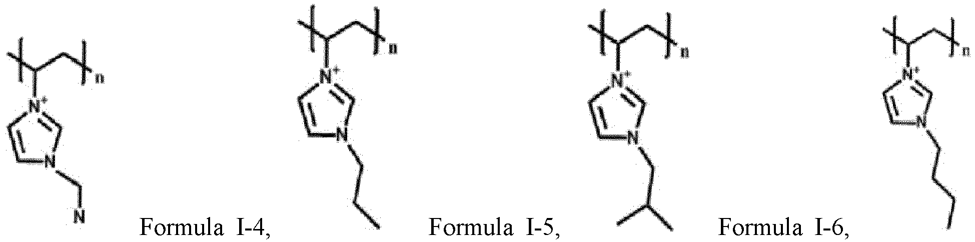

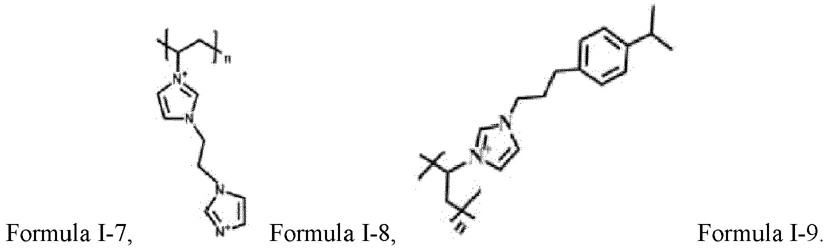

3. The lithium metal battery electrolyte of claim 1, wherein the aprotic solvent comprise one or more selected from the group consisting of dimethyl sulfoxide, ethylene glycol dimethyl ether, diethylene glycol dimethyl ether, tetraethylene glycol dimethyl ether, N,N-dimethylacetamide, 1,3-dioxolane, ethylene carbonate and dimethyl carbonate.

4. The lithium metal battery electrolyte of claim 1, wherein the lithium salt comprises one or more selected from the group consisting of lithium bis((trifluoromethyl)sulfonyl)imide, lithium hexafluorophosphate, lithium nitrate, lithium perchlorate, lithium iodide and lithium trifluoromethanesulfonate.

5. The lithium metal battery electrolyte of claim 1 or 2, wherein a mass concentration of the imidazole-based poly(ionic liquid) in the lithium metal battery electrolyte is in a range of 0.398-1,452.5 g/L.

6. The lithium metal battery electrolyte of claim 1 or 4, wherein a molarity of the lithium salt in the lithium metal battery electrolyte is in a range of 0.01-4.8 mol/L.

7. A lithium metal battery comprising a lithium metal negative electrode, a separator, an electrolyte and a positive electrode, wherein the electrolyte is the lithium metal battery electrolyte of any one of claims 1 to 6.

8. The lithium metal battery of claim 7, wherein the lithium metal battery comprises a lithium-oxygen battery or a lithium-sulfur battery.

9. The lithium metal battery of claim 8, wherein under the condition that the lithium metal battery is the lithium-oxygen battery, the positive electrode is a porous oxygen positive electrode; and
under the condition that the lithium metal battery is the lithium-sulfur battery, the positive electrode is a sulfur positive electrode.

10. The lithium metal battery of claim 7, wherein the lithium metal negative electrode is made of a material comprising one selected from the group consisting of pure metal lithium foil, a lithium alloy, a lithium metal oxide and lithium nitride.
